# EUROPÄISCHE PATENTSCHRIFT

(11) **EP 0 662 047 B1**
(45) Veröffentlichungstag und Bekanntmachung des Hinweises auf die Patenterteilung: **02.01.1997**
(21) Anmeldenummer: 93919008.8
(22) Anmeldetag: 16.09.1993
(51) Int. Cl.: B41J 5/10, G06F 3/02

(54) **VORRICHTUNG ZUR VARIABLEN EINSTELLUNG DES NEIGUNGSWINKELS EINES TASTATURGEHÄUSES**
DEVICE FOR ADJUSTING THE ANGLE OF A KEYBOARD
DISPOSITIF POUR LE REGLAGE DE L'ANGLE D'INCLINAISON D'UN CLAVIER

(30) Priorität: 28.09.1992 DE 4232483
(43) Veröffentlichungstag der Anmeldung: 12.07.1995
(73) Patentinhaber: Siemens Nixdorf Informationssysteme Aktiengesellschaft, 33102 Paderborn (DE)
(72) Erfinder: GUT, Bernhard, Dipl.-Ing., D-86551 Aichach (DE); WANDINGER, Franz, Dipl.-Ing., D-81825 München (DE)
(74) Vertreter: Fuchs, Franz-Josef, Dr.-Ing.
(86) Internationale Anmeldenummer: DE9300872
(87) Internationale Veröffentlichungsnummer: WO9407701

(56) Entgegenhaltungen:
- EP-A- 0 216 274
- IBM TECHNICAL DISCLOSURE BULLETIN Bd. 26, Nr. 7A , Dezember 1983 Seiten 32773277 - 3278 ALLEN 'dual tilt support legs for keypad' in der Anmeldung erwähnt
- IBM TECHNICAL DISCLOSURE BULLETIN Bd. 28, Nr. 6 , November 1985 Seiten 2361 - 2363 'KEYBOARD SUPPORT LIFTING ASSEMBLY WITH LOCKING FEATURE'
- IBM TECHNICAL DISCLOSURE BULLETIN Bd. 25, Nr. 6 , November 1982 Seiten 2900 - 2901 COLLEDGE 'KEYBOARD TILT MECHANISM'
- IBM TECNICAL DISCLOSURE BULLETIN Bd. 24, Nr. 12 , Mai 1982 Seite 6556 KELLEY AND MENDEL 'KEYBOARD-ANGLE ADJUSTMENT'

## Beschreibung

Die Erfindung betrifft eine Vorrichtung nach den Merkmalen des Oberbegriffs des Anspruchs 1.

Tastaturen zur Bedienung von Geräten haben auf den Bedienungskomfort gerichtete ergonomische Anforderungen zu erfüllen, insbesondere wenn, wie bei Datenverarbeitungsanlagen, Tastaturen über längere Zeiträume zu betätigen sind. Zu den ergonomisch gebotenen Ausgestaltungen von Tasturen gehört die Verstellbarkeit der Tastaturneigung gegenüber einer horizontal verlaufenden Arbeitsfläche, und der körperlichen Beschaffenheit unterschiedlicher Bedienpersonen und den Abmessungen unterschiedlicher Einsatzorte für die Tastaruren in angemessener Weise gerecht zu werden.

Vorrichtungen zur Neigungswinkeleinstellung von Tastaturgehäusen sind beispielsweise aus EP B 0 216 274 und "IBM Technical Disclosure Bulletin, Vol. 26, No. 7A, Dezember 1983, Seiten 3277 - 3278 bekannt. In beiden Vorrichtungen sind die für die Befestigung der ausschwenkbaren Standfüße vorgesehenen Lagerelemente relativ aufwendig gestaltet, so daß für das die Lagerelemente aufnehmende Tastaturgehäuse ein erheblicher konstruktiver und fertigungstechnischer Mehraufwand erforderlich ist.

Der vorliegenden Erfindung liegt nun die Aufgabe zugrunde, eine Vorrichtung zur Einstellung des Nueigungswinkels von Tastaturgehäusen so zu gestalten, daß konstruktive Eingriffe in die Form des Gehäuses nicht erforderlich sind.

Die Lösung dieser Aufgabe ergibt sich erfindungsgemäß durch die Merkmale des Anspruchs 1. Vorteilhafte Weiterbildungen der Erfindung sind in den Unteransprüchen angegeben.

Ein Ausführungsbeispiel der Erfindung wird im folgenden anhand der Zeichnung näher erläutert. Dabei zeigen:

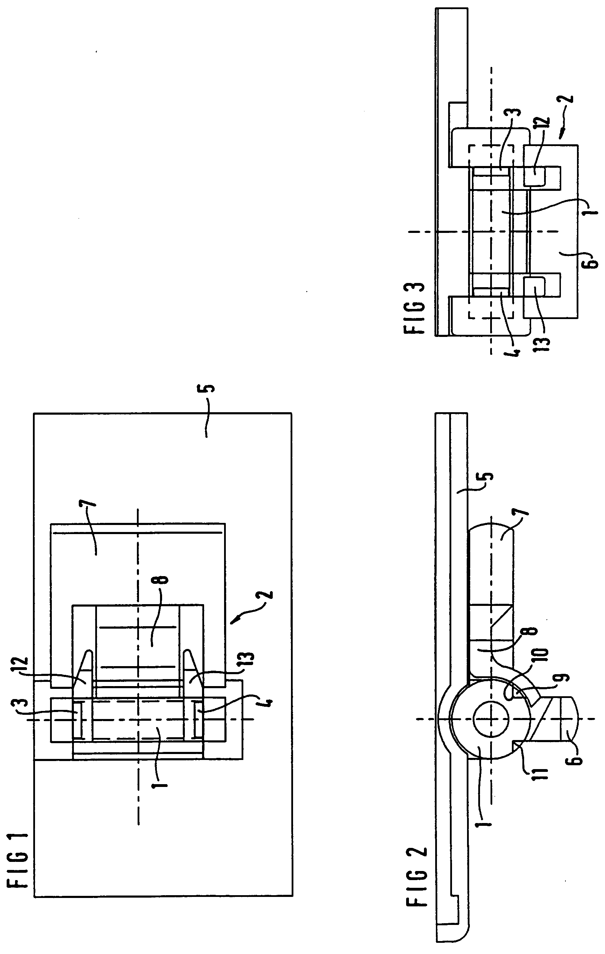

Figur 1, 2, 3, eine erfindungsgemäße Vorrichtung in Drauf-, Seiten- und Vorderansicht.

Die in Figuren 1 bis 3 dargestellte Vorrichtung zur Neigungswinkeleinstellung eines Tastaturgehäuses besteht aus zwei Teilen, einem Lagerelement 1 und einem am Lagerelement 1 schwenkbar befestigten Standfuß 2. Das Lagerelement 1 besteht aus einem rohrförmigen Körper, an dessen beiden offenen Enden je ein Lagerzapfen 3, 4 des Standfußes 2 eintaucht und geführt ist. Das rohrförmige Lagerelement 1 ist an der Bodenfläche des Tastaturgehäuseunterteils 5 angeordnet und gegebenenfalls in einer flachen kreisbogenförmig geformten Rille eingebettet. Der mittels der beiden Lagerzapfen 3, 4 schwenkbar befestigte Standfuß 2 besteht aus zwei in L-Form angeordneten U-Bügeln 6, 7 unterschiedlicher Länge. Der jeweils die beiden U-Schenkel verbindende Teil ist als senkrecht zu den U-Schenkeln verlaufender Steg ausgebildet, an dessen jeweiliger Außenkante sich der Standfuß je nach Einstellung auf einen der beiden unterschiedlich langen U-Bügel in zwei verschiedenen Neigungswinkelstellungen abstützt.

Vorzugsweise der längere der beiden U-Bügel 7 weist eine am Steg einseitig eingespannte und parallel zu den U-Schenkeln verlaufende Zunge 8 auf, deren freies Ende rastend in das Lagerelement 1 eingreift. Zu diesem Zweck weist das freie Zungenende, das sich als Kreisbogensegment an die Mantelfläche des Lagerelements 1 anschmiegt, an der dem Lagerelement 1 zugewandten Fläche ein Rastelement 9 in der Form eines keilförmigen Quersteges auf, das je nach Stellung des Standfußes 2 in eine von zwei um 90° Grad gegeneinander versetzte Rastkerben 10, 11 eingreift. Zur erleichterten Montage des Standfußes 2 am Lagerelement 1 sind an den beiden Enden des rohrförmigen Lagerelements 1 quer zur Rohrachse verlaufende Auflaufschrägen 12, 13 vorgesehen, an denen die Lagerzapfen 3, 4 des Standfußes 2 bei der Montage unter leichter Aufspreizung des U-Bügels 7 entlanggleiten und letztlich in die beiden Rohrenden eintauchen.

## Patentansprüche

1. Vorrichtung zur variablen Einstellung des Neigungswinkels eines auf einer ebenen Stellfläche aufliegenden rechteckigen Tastaturgehäuses unter Verwendung von im Bereich der beiden hinteren Gehäuseecken schwenkbar gelagerten Standfüssen, die in wenigstens zwei verschiedenen Neigungswinkelstellungen fixierbar sind,
**dadurch gekennzeichnet,**
daß am Gehäuseboden ein rohrförmiges, an beiden Enden offenes Lagerelement (1) befestigt ist, daß an diesem Lagerelement (1) ein an beiden Rohrenden mittels je eines Lagerzapfens (3, 4) geführter Standfuß (2) befestigt ist, der aus zwei in L-Form angeordneten, jeweils von den Lagerzapfen abstehenden U-Bügeln (6, 7) unterschiedlicher Länge besteht und daß an wenigstens einem der beiden U-Bügel (7) ein in das Lagerelement (1) eingreifendes Rastelement vorgesehen ist.

2. Vorrichtung nach Anspruch 1,
**dadurch gekennzeichnet,**
daß der jeweils die beiden U-Schenkel verbindende Teil der beiden U-Bügel (6, 7) als streifenförmiger, rechtwinklig zu den U-Schenkeln verlaufender Steg ausgebildet ist.

3. Vorrichtung nach Anspruch 1 oder 2,
**dadurch gekennzeichnet,**
daß bei wenigstens einem der beiden U-Bügel (6, 7) eine parallel zu den U-Schenkeln verlaufende, einseitig am U-Bügel eingespannte Zunge (8) verläuft, deren freies Ende rastend in das Lagerelement (1) eingreift.

4. Vorrichtung nach Anspruch 3,
**dadurch gekennzeichnet,**
daß an der Außenfläche des rohrförmigen Lagerelements wenigstens zwei jeweils parallel zur Rohrachse verlaufende nutartige Rastkerben (10, 11) vorgesehen sind.

5. Vorrichtung nach Anspruch 3 oder 4,
**dadurch gekennzeichnet,**
daß das freie Ende-der Zunge (8) eine der Außenfläche des Lagerelements angepaßte kreisbogensegmentförmige Gestalt aufweist und daß das in die Rastkerben (10, 11) des Lagerelements (1) eingreifende Rastelement (9) an der Innenfläche des Kreisbogensegments angeordnet ist.

6. Vorrichtung nach einem der vorhergehenden Ansprüche,
**dadurch gekennzeichnet,**
daß an den beiden Enden des rohrförmigen Lagerelements (1) quer zur Rohrachse verlaufende Auflaufschrägen (12, 13) vorgesehen sind, an denen die Lagerzapfen (3, 4) des Standfußes (2) bei der Montage unter leichter Aufspreizung der U-Bügel (6, 7) entlanggleiten und letztlich in die beiden Rohrenden eintauchen.

## Claims

1. Device for the variable adjustment of the inclination angle of a rectangular keyboard housing supported on a flat floor area, using stands which are pivotably mounted in the region of the two rear housing corners and can be fixed in at least two different inclination angle settings, characterized in that a tubular bearing element (1), open at the two ends, is fastened to the housing bottom, in that a stand (2), guided at the two tube ends by means of one bearing pin (3, 4) each, is fastened on this bearing element (1), which stand consists of two U-brackets (6, 7) of different lengths, arranged in L-shape and in each case projecting from the bearing pins, and in that a locking element engaging in the bearing element (1) is provided on at least one of the two U-brackets (7).

2. Device according to Claim 1, characterized in that the part, connecting in each case the two U-legs, of the two U-brackets (6, 7) is constructed as strip-shaped web running at right angles to the U-legs.

3. Device according to Claim 1 or 2, characterized in that next to at least one of the two U-brackets (6, 7) a tongue (8) runs, running parallel to the U-legs and clamped at one end to the U-bracket, whose free end engages in a locking manner in the bearing element (1).

4. Device according to Claim 3, characterized in that at least two groove-like locking notches (10, 11), running in each case parallel to the tube axis, are provided on the outer surface of the tubular bearing element.

5. Device according to Claim 3 or 4, characterized in that the free end of the tongue (8) has a design which is matched to the outer surface of the bearing element and has the shape of a circular arc, and in that the locking element (9), engaging in the locking notches (10, 11) of the bearing element (1), is arranged on the inner surface of the circular arc.

6. Device according to one of the preceding claims, characterized in that inclined surfaces (12, 13), running transversely to the tube axis, are provided on the two ends of the tubular bearing element (1), along which inclined surfaces the bearing pins (3, 4) of the stand (2) slide during the assembly while slightly spreading the U-brackets (6, 7) and finally dip into the two tube ends.

## Revendications

1. Dispositif de réglage variable de l'angle d'inclinaison d'un bâti de clavier, rectangulaire et placé sur une surface d'installation plate, ce dispositif utilisant des pieds, montés de manière à pivoter dans la zone des deux coins arrière du bâti et pouvant être immobilisés dans au moins deux positions d'inclinaison différentes,
caractérisé par le fait qu'un élément formant palier (1), tubulaire et ouvert aux deux extrémités, est fixé au fond du bâtis, qu'un pied (2), est fixé aux deux extrémités du tube respectivement au moyen d'un tourillon (3, 4), ce pied consistant en deux étriers en U (6, 7) de longueurs différentes, s'écartant chacun à partir des tourillons et disposés en forme de L, et il est prévu, sur au moins l'un des deux étriers en U (7), un élément d'encliquetage pénétrant dans l'élément de palier (1).

2. Dispositif selon la revendication 1,
caractérisé par le fait que la partie, qui relie respectivement les branches du U des deux étriers en U (6, 7), est réalisée sous la forme d'une barrette en forme de bande, qui s'étend à angle droit par rapport aux branches du U.

3. Dispositif selon la revendication 1 ou 2,
caractérisé par le fait qu'il est prévu, pour au moins l'un des deux étriers en U (6, 7), une languette (8) qui est bloquée d'un côté sur l'étrier en U, qui s'étend parallèlement aux branches du U et dont l'extrémité libre vient s'encliqueter dans l'élément de support (1).

4. Dispositif selon la revendication 3,
caractérisé par le fait qu'il est prévu, sur la surface extérieure de l'élément tubulaire formant palier, au moins deux encoches d'encliquetage (10, 11) en forme de rainure, qui s'étendent respectivement parallèlement à l'axe du tube.

5. Dispositif selon la revendication 3 ou 4,
caractérisé par le fait que l'extrémité libre de la languette (8) est en forme de segment d'arc de cercle, adaptée à la surface extérieure de l'élément formant palier et que l'élément d'encliquetage (9), qui pénètre dans les encoches d'encliquetage (10, 11) de l'élément formant support (1), est disposé sur la face intérieure du segment d'arc de cercle.

6. Dispositif selon l'une des revendications précédentes,
caractérisé par le fait qu'il est prévu, aux deux extrémités de l'élément tubulaire formant palier (1), des rampes d'accès (12, 13), qui s'étendent perpendiculairement à l'axe du tube et sur lesquelles les tourillons (3, 4) du pied (2) glissent, lors du montage, en écartant légèrement les étriers en U (6, 7), pour enfin pénétrer dans les deux extrémités du tube.
